# EUROPÄISCHE PATENTSCHRIFT

(11) **EP 2 377 440 B1**
(45) Veröffentlichungstag und Bekanntmachung des Hinweises auf die Patenterteilung: **10.04.2013**
(21) Anmeldenummer: 11162306.2
(22) Anmeldetag: 13.04.2011
(51) Int. Cl.: A47J 37/07

(54) **Grillvorrichtung**
Grill device
Dispositif de grill

(30) Priorität: 15.04.2010 CH 5382010
(43) Veröffentlichungstag der Anmeldung: 19.10.2011
(73) Patentinhaber: Guthauser, Marius, 4313 Möhlin (CH)
(72) Erfinder: Guthauser, Marius, 4313 Möhlin (CH)
(74) Vertreter: Vossius & Partner

(56) Entgegenhaltungen:
- CH-A- 516 300
- US-B1- 6 892 722

## Beschreibung

### Technisches Gebiet

Die Erfindung betrifft eine Grillvorrichtung gemäß dem Oberbegriff des unabhängigen Patentanspruchs 1. Solche Grillvorrichtungen, die eine Feuerschale zum Verfeuern eines in der Feuerschale angeordneten Brennstoffs und einen Grundkörper mit einem Abluftabzug zum gezielten Abführen von durch den verfeuerten Brennstoff erzeugter Abluft umfassen, können zum Grillen verschiedener Güter wie beispielsweise Fleisch, Fisch oder Gemüse unter freiem Himmel eingesetzt werden.

### Stand der Technik

Die Zubereitung von Fleisch, Wurstwaren, Fisch und Gemüse mittels eines Grills häufig auch unter freiem Himmel ist insbesondere bei warmen Außentemperaturen eine beliebte Freizeitaktivität. Zudem erfreut sich auch die Zubereitung von Backwaren wie beispielsweise Pizzas in Außenbereichen beziehungsweise unter freiem Himmel mittels eines Ofens zunehmender Beliebtheit. Dabei werden feste und mobile Grillvorrichtungen respektive Öfen in unterschiedlichen Ausgestaltungen eingesetzt. Beispielsweise ist in der CH 516 300 A ein Bratspieß- und Grillgerät mit einem schwenkbar gelagerten Brennstoffbehälter gezeigt. Oder in der DE-A1-36 33 142 ist beispielsweise ein kombiniertes Back-, Grill- und Räuchergerät zur Aufstellung im Freien beschrieben, das einen Backraum und einen darüber angeordneten in einen Kamin mündenden Aufsatz aufweist. Im Innenraum des Aufsatzes ist ein Grillgerät anordbar und der Innenraum dient zudem als Räucherkammer. Entsprechend muss das Back-, Grill- und Räuchergerät groß genug dimensioniert sein, dass in der Horizontalen ein Grillgerät von zweckmäßiger Abmessung angeordnet werden kann und dass in der Vertikalen genügend Backraum sowie Grill- und Räucherraum vorhanden ist. Dadurch beanspruchen solche Back-, Grill- und Räuchergeräte verhältnismäßig viel Raum und können beispielsweise in einem Garten als dominierende und/oder störende Elemente wahrgenommen werden. Zudem kann bei solchen Back-, Grill- und Räuchergeräten die Sammlung der Asche beziehungsweise der verbrannten Kohle leicht zu Verschmutzungen führen sowie aufwändig sein und an zusätzliche Hilfsmittel wie eine Bürste gebunden sein. Weiter sind die Grillgeräte bei solchen Back-, Grill- und Räuchergeräten nur von einer Vorderseite her zugänglich, was zu einer unkomfortablen Handhabung im Grillbetrieb führen kann.

Weiter ist in der FR-A1-2 747 904 ein Grillgerät zum Grillen unter freiem Himmel gezeigt, das ein nach oben offenes horizontales Becken zur Aufnahme einer Feuerung und einen vertikalen Kamin als Rauchabzug umfasst. Oberhalb des Beckens ist ein Grülrost oder eine Grillplatte horizontal anordbar, der beziehungsweise die von drei Seiten her einfach zugänglich ist, so dass eine verhältnismäßig komfortable Handhabung des Grills möglich ist. Da das Becken horizontal ausgestaltet ist beanspruchen solche Grillgeräte jedoch ebenfalls verhältnismäßig viel Raum und können beispielsweise in einem Garten als dominierende und/oder störende Elemente wahrgenommen werden. Zudem kann bei solchen Grillgeräten ebenfalls die Sammlung der Asche beziehungsweise der verbrannten Kohle leicht zu Verschmutzungen führen und aufwändig sein. Schließlich sind solche Grillgeräte für sich alleine und insbesondere deren Becken verhältnismäßig exponiert, während sie eingestellt sind, so dass sie häufig durch zusätzliche Mittel geschützt werden, um nicht durch Verwitterung beschädigt zu werden.

Der vorliegenden Erfindung liegt daher die Aufgabe zu Grunde, eine Grillvorrichtung vorzuschlagen, die verhältnismäßig platzsparend und witterungsresistent ist, die im Betrieb verhältnismäßig einfach zu handhaben ist und die eine verhältnismäßig einfache und saubere Entsorgung der Asche nach Verwendung ermöglicht.

### Darstellung der Erfindung

Die Aufgabe wird erfindungsgemäß durch eine Grillvorrichtung gelöst, wie sie im unabhängigen Patentanspruch 1 definiert ist. Vorteilhafte Ausführungsvarianten der erfindungsgemäßen Grillvorrichtung ergeben sich aus den abhängigen Patentansprüchen.

Das Wesen der Erfindung besteht im Folgenden: In einer Grillvorrichtung, die eine Feuerschale zum Verfeuern eines in der Feuerschale angeordneten Brennstoffs und einen Grundkörper mit einem Abluftabzug zum gezielten Abführen von durch den verfeuerten Brennstoff erzeugter Abluft umfasst, ist die Feuerschale schwenkbar mit dem Grundkörper verbunden, so dass die Feuerschale in einer Feuerposition, in welcher die Feuerschale vom Grundkörper aufgeklappt ist und in welcher der Brennstoff in der Feuerschale verfeuerbar ist, und in einer Einstellposition, in der die Feuerschale am Grundkörper anliegt, anordbar ist. Unter dem Begriff "Brennstoff" werden in diesem Zusammenhang alle zum Feuern beziehungsweise Heizen eines Grills geeigneten Stoffe verstanden und insbesondere Holz, Kohle oder auch Gas. Der Grundkörper kann auf beziehungsweise an einem Grundgestell befestigt sein und kann insbesondere auch im Wesentlichen vertikal ausgerichtet sein. Er kann eine längliche kubische Form aufweisen und kann insbesondere als senkrecht aufgestellter kubischer Kasten ausgestaltet sein. Die Feuerschale kann in der Feuerposition im Wesentlichen horizontal ausgerichtet sein, so dass der Brennstoff einfach darin anordbar ist und so dass ein Grillrost oder dergleichen einfach über dem brennenden Brennstoff positioniert werden kann. Sie kann auch einen Griff zum Schwenken aufweisen, mit welchem die Feuerschale einfach von der Einstellposition in die Feuerposition geschwenkt werden kann beziehungsweise umgekehrt. Die Feuerschale und/oder der Grundkörper können Befestigungsmittel aufweisen, mittels welcher die Feuerschale in der Einstellposition gehalten werden kann. Insbesondere können diese Befestigungsmittel als Magnete ausgestaltet sein, so dass die Feuerschale in der Einstellposition am Grundkörper gehalten ist. Grundkörper, Feuerschale und Abluftabzug können aus Metall hergestellt sein insbesondere aus Eisen oder Stahl. Der Abluftabzug kann ein Kamin sein und kann nach oben auch abgedeckt sein, um beispielsweise zu verhindern, dass Niederschlag durch den Kamin in den Grundkörper eindringen kann.

Erfindungsgemäß bilden Grundkörper und Feuerschale in der Einstellposition, in der die Feuerschale am Grundkörper anliegt, eine kompakte Einheit, die verhältnismäßig wenig Platz beansprucht und die ein verhältnismäßig schlankes Erscheinungsbild abgeben kann. Das Erscheinungsbild kann zusätzlich durch die Auswahl geeigneter Materialien verhältnismäßig einfach vorteilhaft gestaltet werden. Außerdem kann der Grundkörper in der Einstellposition durch die Feuerschale geschlossen sein, so dass die Grillvorrichtung in dieser Einstellposition verhältnismäßig witterungsbeständig ist. In der Feuerposition kann die Feuerschale von drei Seiten her zugänglich sein, was eine verhältnismäßig komfortable Bedienung und Handhabung der Grillvorrichtung ermöglicht.

Vorzugsweise weist die Feuerschale eine Grundfläche und einen Rand auf, wobei sich der Rand entlang der Seiten der Grundfläche erstreckt, die nicht dem Grundkörper zugewandt sind, und wobei der Rand zum Sichern des Brennstoffs in der Feuerschale von der Grundfläche absteht. Eine solche Ausgestaltung der Feuerschale ermöglicht eine einfache Sicherung des Brennstoffs vor einem Entweichen von der Feuerschale, was einer einfachen komfortablen und sicheren Handhabung der Grillvorrichtung beim Grillen zuträglich sein kann. Die Grundfläche kann dabei insbesondere im Wesentlichen rechteckig sein. Der Rand kann im Wesentlichen rechtwinklig von der Grundfläche abstehen und insbesondere bei einer in der Feuerposition im Wesentlichen horizontal ausgerichteten Feuerschale kann der Rand im Wesentlichen rechtwinklig nach oben von der Grundfläche abstehen. Falls die Feuerschale einen Griff aufweist, kann dieser am Rand an der dem Grundkörper abgewandten Seite der Grundfläche befestigt sein, was eine verhältnismäßig einfache und zweckmäßige Konstruktion der Feuerschale mit dem Griff ermöglicht.

Mit Vorteil umfasst der Grundkörper einen Aschefänger, wobei die Feuerschale so mit dem Grundkörper verbunden ist, dass in der Feuerschale angeordnete Asche in den Aschefänger bewegt ist, wenn die Feuerschale in der Einstellposition angeordnet ist. Das Bewegen der Asche kann dabei ein durch die Gravitation induziertes Rutschen oder Fallen sein und erfolgt insbesondere ohne aktives Zutun eines Benutzers des Grills. Bei einer in der Feuerposition im Wesentlichen horizontal und in der Einstellposition im Wesentlichen vertikal ausgerichteten Feuerschale kann die Asche beziehungsweise der verbrannte Brennstoff automatisch in den Aschefänger rutschen, wenn die Feuerschale von der Feuerposition in die Einstellposition hochgeklappt wird. Der Aschefänger kann als eine Schublade ausgestaltet sein, damit die Asche auf einfache Weise entsorgt werden kann, nachdem sie dem Aschefänger zugeführt worden ist.

Die Grillvorrichtung weist eine Abzughaube auf, die schwenkbar am Grundkörper angeordnet ist, so dass die Abzughaube in einer Abzugposition, in der die Abzughaube vom Grundkörper aufgeklappt ist und in der die durch den verfeuerten Brennstoff erzeugte Abluft über die Abzughaube dem Abluftabzug zuführbar ist, und eine Einstellposition, in der die Abzughaube am Grundkörper anliegt, anordbar ist. Mit einer solchen Abzughaube kann die Abluft effizient abgeführt werden, so dass ein komfortables Grillen ohne wesentliche Beeinträchtigung durch den Rauch möglich ist. Gleichzeitig kann die Grillvorrichtung mit einer solchen Abzughaube kompakt und auch geschlossen ausgestaltet sein, wenn sie sich in der Einstellposition befindet. Auch ermöglicht das Abführen der Abluft über die Abzughaube und den Abluftabzug ein gezieltes Abführen der Abluft an einen vorbestimmten Ort. Beispielsweise kann der Abluftanzug dazu auch an ein weiterführendes Rohr oder dergleichen angeschlossen sein. Die Abzughaube weist dabei vorzugsweise eine Hauptfläche und zwei einklappbar mit der Hauptfläche verbundene Seitenflächen auf. Die Hauptfläche kann insbesondere im Wesentlichen rechteckig ausgestaltet sein und die Seitenflächen im Wesentlichen dreieckig. Zudem kann die Abzughaube Arretierungsmittel umfassen, mittels denen die eingeklappten Seitenflächen an der Hauptfläche arretiert werden können. Indem die Seitenflächen ausklappbar ausgestaltet sind, kann die Abzughaube einerseits bei ausgeklappten Seitenflächen verhältnismäßig einfach durch die Seitenflächen in der Abzugposition gehalten werden und andererseits bei eingeklappten Seitenflächen trotzdem an den Grundkörper anliegend angeordnet werden.

Mit Vorteil umfasst die Grillvorrichtung eine Werkzeughalterung, die klappbar mit dem Grundkörper verbunden ist, so dass in der Feuerposition der Feuerschale ein Grillwerkzeug in der Werkzeughalterung anordbar ist und dass die Werkzeughalterung in der Einstellposition am Grundkörper anliegend angeordnet ist. Unter dem Begriff "Grillwerkzeug" werden beispielsweise Spieße, Roste oder ähnliche zum Grillen geeignete Werkzeuge verstanden. Die Werltzeughalterung kann somit ausgeklappt sein, wenn sich die Grillvorrichtung in der Feuerposition befindet, um ein stabiles effektives Halten des Grillwerkzeugs zu ermöglichen. Zudem kann die Werkzeughalterung eingeklappt sein, wenn sich die Grillvorrichtung in der Einstellposition befindet, damit sie der Feuerschale beim Zuschwenken beziehungsweise beim Anordnen an den Grundkörper nicht im Wege steht und damit eine kompakte Ausgestaltung der Grillvorrichtung in der Einstellposition möglich ist. Die Werkzeughalterung kann beispielsweise um eine Achse klappbar sein, die im Wesentlichen rechtwinklig zu der Schwenkachse der Feuerschale liegt. Sie kann als zwei Bleche ausgestaltet sein, die ausgeklappt jeweils entlang der beiden dem Grundkörper weder zu- noch abgewandten Querseiten der Feuerschale oberhalb der Feuerschale anordbar sind, wenn die Grillvorrichtung beziehungsweise zumindest die Feuerschale und die Werkzeughalterung in der Feuerposition sind. Bevor die Feuerschale zugeschwenkt wird, können die Bleche eingeklappt werden. Die Bleche können über ein Scharnier mit dem Grundkörper verbunden sein und sie können mit an verschiedenen Positionen angeordneten Schlitzen ausgestaltet sein, so dass ein Grillwerkzeug an verschiedenen Positionen über der Feuerschale angeordnet werden kann.

Vorzugsweise umfasst der Grundkörper einen Schrank, der eine an einer der Feuerschale abgewandten Rückseite des Grundkörpers ausgebildete Schranktür aufweist. Ein solcher Schrank kann sich zum Verräumen verschiedener Gegenstände wie beispielsweise von Grillwerkzeug oder Grillpflegemitteln, ohne dass die kompakte Ausgestaltung der Grillvorrichtung in der Einstellposition wesentlich beeinträchtigt wird. Insbesondere kann mit einem solchen Schrank auch ein Volumen des Grundkörpers, das aus statischen Gründen vorhanden ist, zweckmäßig genutzt werden. Der Schrank kann so modular ausgestaltet sein, dass er als Ganzes in den Grundkörper eingesetzt und wieder ausgebaut werden kann. Der Schrank umfasst vorzugsweise eine Tischplatte, die bei geöffneter Schranktür aus dem Grundkörper ausklappbar ist. Insbesondere kann die Tischplatte in eine der Feuerschale entgegengesetzte Richtung ausklappbar sein. Damit kann eine Arbeitsfläche bereitgestellt werden, die ein komfortables Grillen unterstützt.

Vorzugsweise umfasst die Grillvorrichtung einen Ofen, der an einer der Feuerschale abgewandten Rückseite des Grundkörpers am Grundkörper befestigbar ist, so dass ein Abluftabzug des Ofens in den Abluftabzug des Grundkörpers mündet. Mit einem solchen modular am Grundkörper anordbaren Ofen können mittels der Grillvorrichtung auch Backwaren wie beispielsweise Pizzas zubereitet werden. Dabei umfasst der Ofen vorzugsweise einen Feuerraum zum Heizen des Ofens mittels eines festen Brennstoffs und ein Gasfeuersystem zum Heizen des Ofens mittels eines gasförmigen Brennstoffs. Ein solches Heizsystem des Ofens ermöglicht ein flexibles, präzises und schnelles Heizen des Ofens. Der Ofen kann insbesondere so modular ausgestaltet sein, dass er als Ganzes in den Grundkörper eingesetzt und wieder ausgebaut werden kann. Somit kann insbesondere ermöglicht werden, dass je nach Bedarf der Ofen oder der Schrank am Grundkörper angeordnet ist.

Ein Ofen der oben beschriebenen Art kann auch zusammen mit einem Grundkörper der oben beschriebenen Art als Backvorrichtung ohne Feuerschale und ohne Abzughaube ausgestaltet sein. Eine solche nicht erfindungsgemässe Backvorrichtung weist eine Mehrzahl der oben aufgeführten Vorteile ebenfalls auf.

### Kurze Beschreibung der Zeichnungen

Im Folgenden wird die erfindungsgemäße Grillvorrichtung unter Bezugnahme auf die beigefügten Zeichnungen anhand von Ausführungsbeispielen detaillierter beschrieben. Es zeigen:
- Fig. 1: eine schematische perspektivische Ansicht eines ersten Ausführungsbeispiels einer erfindungsgemäßen Grillvorrichtung;
- Fig. 2: eine schematische Querschnittansicht der Grillvorrichtung von Fig. 1 in einer Feuerposition;
- Fig. 3: eine erste schematische Querschnittansicht der Grillvorrichtung von Fig. 1 während dem Übergang von der Feuerposition in eine Einstellposition;
- Fig. 4: eine zweite schematische Querschnittansicht der Grillvorrichtung von Fig. 1 während dem Übergang von der Feuerposition in die Einstellposition;
- Fig. 5: eine dritte schematische Querschnittansicht der Grillvorrichtung von Fig. 1 während dem Übergang von der Feuerposition in die Einstellposition;
- Fig. 6: eine vierte schematische Querschnittansicht der Grillvorrichtung von Fig. 1 während dem Übergang von der Feuerposition in die Einstellposition;
- Fig. 7: eine fünfte schematische Querschnittansicht der Grillvorrichtung von Fig. 1 während dem Übergang von der Feuerposition in die Einstellposition;
- Fig. 8: eine sechste schematische Querschnittansicht der Grillvorrichtung von Fig. 1 während dem Übergang von der Feuerposition in die Einstellposition;
- Fig. 9: eine schematische Querschnittansicht der Grillvorrichtung von Fig. 1 in der Einstellposition;
- Fig. 10: ein Detail einer schematische Querschnittansicht der Grillvorrichtung von Fig. 1 in der in Fig. 5 gezeigten Position;
- Fig. 11: eine schematische Seitenansicht eines Ausführungsbeispiels eines Schranks für die Grillvorrichtung von Fig. 1;
- Fig. 12: eine schematische Seitenansicht des Schranks von Fig. 11 mit geöffneter Schranktür;
- Fig. 13: eine schematische Querschnittansicht der Grillvorrichtung von Fig. 1 mit dem Schrank von Fig. 11 eingebaut;
- Fig. 14: eine schematische Querschnittansicht eines ersten Ausftihrungsbeispiels eines Ofens für die Grillvorrichtung von Fig. 1;
- Fig. 15: eine schematische Querschnittansicht der Grillvorrichtung von Fig. 1 mit dem Ofen von Fig. 14 eingebaut;
- Fig. 16: eine schematische perspektivische Ansicht der Grillvorrichtung von Fig. 1 mit dem Ofen von Fig. 14 eingebaut;
- Fig. 17: eine schematische perspektivische Ansicht der Grillvorrichtung von Fig. 1 mit einem zweiten Ausführungsbeispiel eines Ofens eingebaut;
- Fig. 18: eine schematische perspektivische Ansicht der Grillvorrichtung von Fig. 1 mit einem dritten Ausführungsbeispiel eines Ofens eingebaut;
- Fig. 19: eine schematische Querschnittansicht eines zweiten Ausführungsbeispiels einer erfindungsgemäßen Grillvorrichtung in einer Feuerposition;
- Fig. 20: eine schematische Seitenansicht der Grillvorrichtung von Fig. 1 mit einem vierten Ausführungsbeispiel eines Ofens eingebaut;
- Fig. 21: eine schematische Querschnittansicht entlang der Linie A-A der Grillvorrichtung von Fig. 20 in einer Ofenheizposition;
- Fig.22: eine schematische perspektivische Ansicht einer Ofenraumvorrichtung der Grillvorrichtung von Fig. 20;
- Fig. 23: eine schematische Querschnittansicht entlang der Linie A-A der Grillvorrichtung von Fig. 20 in einer ersten Übergangsposition von der Ofenheizposition in eine Ofenbetriebsposition;
- Fig. 24: eine schematische Querschnittansicht entlang der Linie A-A der Grillvorrichtung von Fig. 20 in einer zweiten Übergangsposition von der Ofenheizposition in die Ofenbetriebsposition;
- Fig. 25: eine schematische Querschnittansicht entlang der Linie A-A der Grillvorrichtung von Fig. 20 in einer dritten Übergangsposition von der Ofenheizposition in die Ofenbetriebsposition;
- Fig. 26: eine schematische Querschnittansicht entlang der Linie A-A der Grillvorrichtung von Fig. 20 in der Ofenbetriebsposition;
- Fig. 27: eine schematische Querschnittansicht der Grillvorrichtung von Fig. 20 in einer ersten Ofenbetriebsposition; und
- Fig. 28: eine schematische Querschnittansicht der Grillvorrichtung von Fig. 20 in einer zweiten Ofenbetriebsposition.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach außen" bezeichnen Richtungen hin zum oder weg vom geometrischen Mittelpunkt der Grillvorrichtung sowie benannter Teile derselben. Die Terminologie umfasst die oben ausdrücklich erwähnten Wörter, Ableitungen von denselben und Wörter ähnlicher Bedeutung.

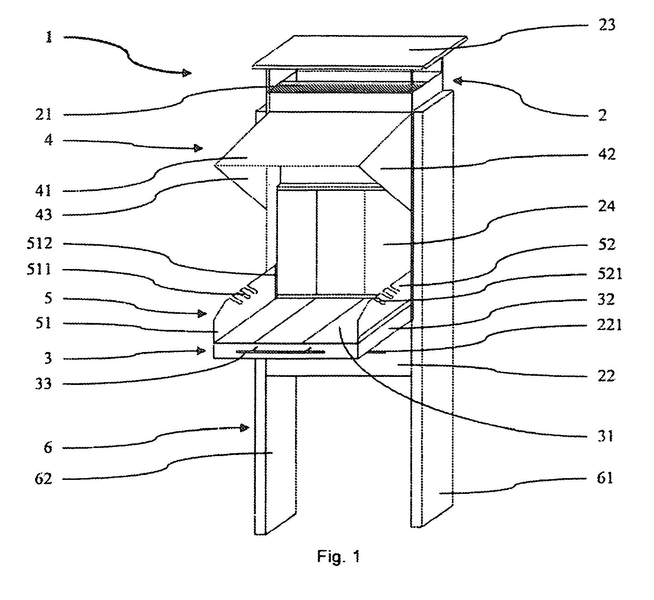

Fig. 1 zeigt ein erstes Ausführungsbeispiel einer erfindungsgemäßen Grillvorrichtung 1, die einen Grundkörper 2, eine Feuerschale 3, eine Abzughaube 4, eine Werkzeughalterung 5 und ein Grundgestell 6 umfasst. Der Grundkörper 2 weist von außen betrachtet eine im Wesentlichen vertikal längliche kubische Form auf und umfasst ein Metallgerüst, das einen Rauchabzug 21 als Abluftabzug bildet. An seinem unteren Ende weist der Grundkörper 2 eine Ascheschublade 22 als Aschefänger mit einem Ausziehgriff 221 auf. An seinem oberen Ende weist der Grundkörper 2 eine Abdeckplatte 23 auf, die den Grundkörper 2 und das Grundgestell 6 seitlich überragt und mit der unter anderem verhindert wird, dass Niederschlag durch den Rauchabzug 21 in den Grundkörper 2 hinein eindringen kann. Seitlich ist der Grundkörper 2 an einer rechten ersten Granitplatte 61 des Grundgestells 6 und an einer linken zweiten Granitplatte des Grundgestells 6 montiert. Diese Montage kann beispielsweise mittels geeigneter Schraubverbindungen zwischen Grundgestell 6 und Grundkörper 2 vollzogen sein. Über das Grundgestell 6 ist die Grillvorrichtung 1 aufstellbar und in seiner Höhe auf eine komfortable Handhabbarkeit angepasst ausgestaltbar.

Oberhalb der Ascheschublade 22 ist die Feuerschale 3 mittels zweier Schwenkverschraubungen mit dem Grundkörper 2 verbunden, so dass sie um eine horizontale Achse von einer horizontalen Lage, die der in Fig. 1 gezeigten Feuerposition der Feuerschale 3 entspricht, in eine vertikale Lage, die der Einstellposition der Feuerschale 3 entspricht, nach oben schwenkbar ist. Die Feuerschale 3 weist eine rechteckige Grundfläche 31 sowie einen sich entlang der Querseiten der Grundfläche 31 und entlang der dem Grundkörper 2 abgewandten Seite der Grundfläche 31 erstreckenden Rand 32, der rechtwinklig zur Grundfläche 21 angeordnet ist. An der Außenseite der dem Grundkörper 2 abgewandten Seite des Rands 32 ist ein Schwenkgriff 33 angeordnet, über den die Feuerschale 3 von einem Benutzer der Grillvorrichtung 1 geschwenkt werden kann. Weiter ist angrenzend oberhalb der Feuerschale 3 eine rechteckige Schamottplatte 24 vertikal im Grundkörper 2 angeordnet.

Beabstandet oberhalb der Feuerschale 3 ist eine rechteckige Hauptfläche 41 der Abzughaube 4 über ein Klavierscharnier mit dem Grundkörper 2 verbunden, so dass die Abzughaube 4 um eine horizontale Achse von einer ausgeschwenkten Lage, die der in Fig. 1 gezeigten Feuerposition der Abzughaube 4 entspricht, in eine vertikale Lage, die der Einstellposition der Abzughaube 4 entspricht, nach unten schwenkbar ist. Die Abzughaube 4 umfasst weiter eine rechte dreieckige erste Seitenfläche 42 und eine linke dreieckige zweite Seitenfläche 43. Die erste Seitenfläche 42 und die zweite Seitenfläche 43 sind jeweils klappbar mit der Hauptfläche 41 verbunden, so dass sie von einer in der Fig. 1 gezeigten rechtwinklig von der Hauptfläche 41 abstehenden Position in eine an der Hauptfläche 41 anliegende Position einklappbar sind.

Angrenzend oberhalb der Feuerschale 3 und unterhalb der Abzughaube 4 sind ein rechtes erstes Aufnahmeblech 52 der Werkzeughalterung 5 über ein erstes Schwenk- und Hebeelement 522 (in Fig. 1 nicht ersichtlich) und ein linkes zweites Aufnahmeblech 51 der Werkzeughalterung 5 über ein zweites Schwenk- und Hebeelement 512 mit dem Grundkörper 2 verbunden. Das erste Aufnahmeblech 52 weist drei Aufnahmekerben 521 für Grillspieße auf und das zweite Aufnahmeblech 51 dazu korrespondierende drei Aufnahmekerben 511 für Grillspieße. Das erste Aufnahmeblech 52 und das zweite Aufnahmeblech 51 sind jeweils von einer Lage oberhalb und entlang der Querseiten des Randes 32 der Feuerschale 3, die der in der Fig. 1 gezeigten Feuerposition der Werkzeughalterung 5 entspricht, in eine am Grundkörper 2 anliegende Lage, die der Einstellposition der Werkzeughalterung 5 entspricht, einklappbar.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

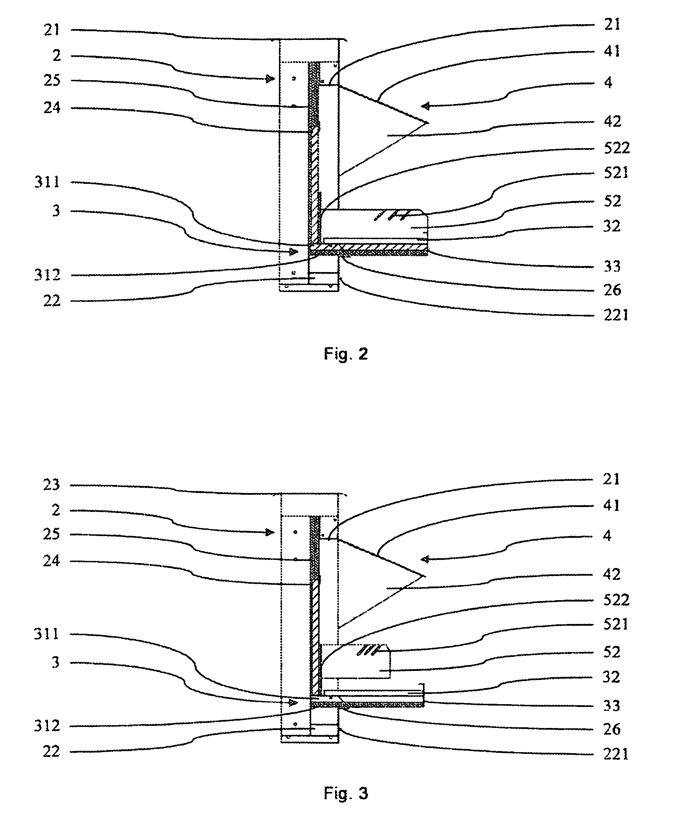

In der Fig. 2 ist die Grillvorrichtung 1 in einer schematischen Querschnittsansicht in einer Feuerposition gezeigt. Der Grundkörper 2 umfasst eine Isolation 25, die sich zum einen zwischen einer Rückseite der Schamottplatte 24 und einer den Grundkörper 2 vertikal durchlaufende Trennwand erstreckt und zum anderen oberhalb der Schamottplatte 24 zwischen Rauchabzug 21 und der Trennwand angeordnet ist. Die Abdeckplatte 23 ist in ihren Endbereichen nach unten abgerundet ausgestaltet, um ein zuverlässiges Abfließen von Regen beziehungsweise Abrutschen von Schnee zu ermöglichen.

Die Grundfläche 31 der Feuerschale 3 umfasst ein Blech, auf dem eine Isolationsschicht 312 und eine Schamottplatte 311 angeordnet sind. Der Rand 32 überragt die ganze Grundfläche 31 nach oben hin. Der Grundkörper 2 weist eine Trägerplattform 26 auf, die sich über die ganze breite der Feuerschale 3 erstreckt und auf der die Feuerschale 3 in der Feuerposition horizontal aufliegt. Das erste Aufnahmeblech 52 der Werkzeughalterung 5 ist in der Feuerposition angeordnet, wobei das Schwenk- und Hebeelement 522 dabei nach unten bewegt ist, wodurch das erste Ausnahmeblech 52 so arretiert ist, dass es nicht einklappbar ist.

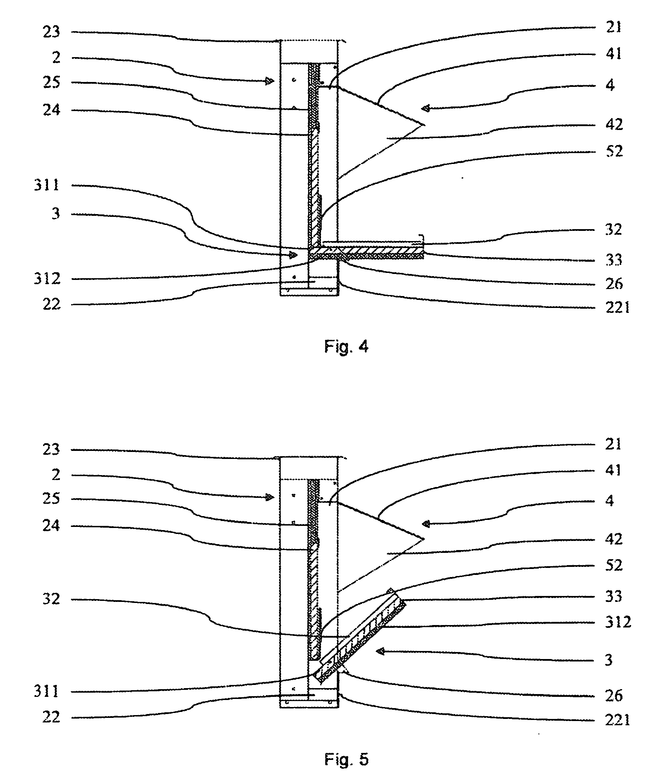

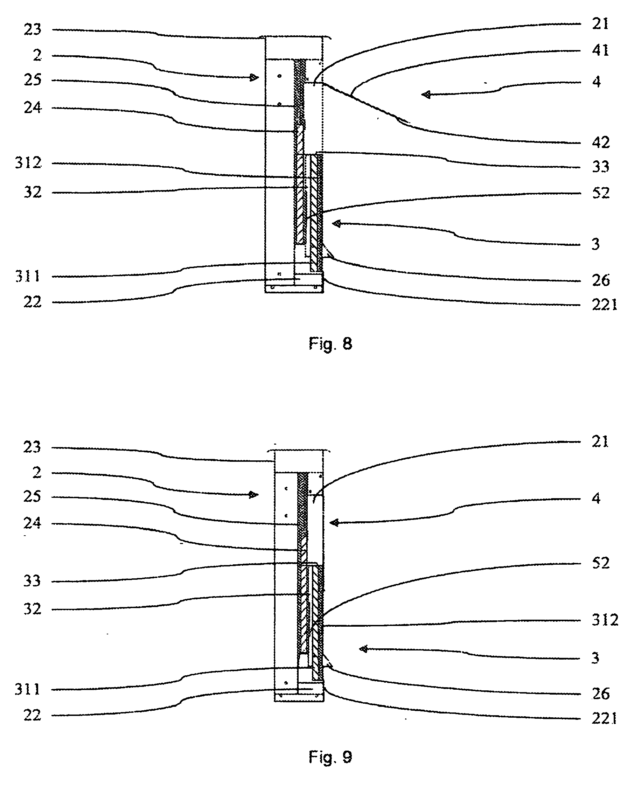

Die Fig. 2 bis Fig. 9 zeigen, wie die Grillvorrichtung 1 von der in Fig. 2 gezeigten Feuerposition in eine in Fig. 9 gezeigten Einstellposition der Grillvorrichtung 1 gebracht werden kann. Wie in Fig. 3 gezeigt wird dazu zuerst das erste Aufnahmeblech 52 angehoben, so dass die Arretierung durch das Hebe- und Schwenkelement 522 aufgehoben ist, und das erste Aufnahmeblech 52 wird eingeklappt bis es wie in Fig. 4 gezeigt an der Schamottplatte 24 des Grundkörpers 2 anliegt. Gleiches geschieht analog auch mit dem zweiten Aufnahmeblech 51, wobei die Reihenfolge des Einklappens des ersten Aufnahmeblechs 52 und des zweiten Aufnahmeblechs 51 unerheblich ist. Die Werkzeughalterung 5 befindet sich dann wie in Fig. 4 gezeigt in seiner Einstellposition.

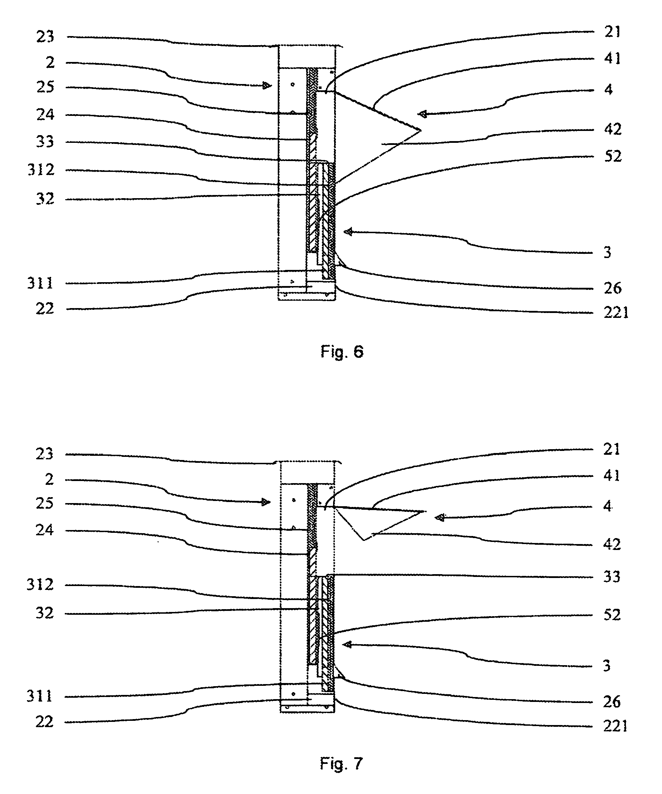

Danach wird wie in Fig. 5 gezeigt die Feuerschale 3 von der Trägerplattform 26 des Grundkörpers abgehoben und hochgeschwenkt bis sie wie in Fig. 6 gezeigt am Grundkörper 2 anliegt beziehungsweise größtenteils im Inneren des Grundkörpers 2 angeordnet ist. Über an einer Oberseite des Randes 32 angeordnete Magnete wird die Feuerschale wie in Fig. 6 gezeigt in seiner Einstellposition am Grundkörper 21 gehalten. Danach wird wie in Fig. 7 gezeigt die Abzughaube 4 leicht hochgeschwenkt, so dass die Hauptfläche 41 nicht mehr über die Seitenflächen 42 am Grundkörper 2 abgestützt ist. Die Seitenflächen 42 werden eingeklappt bis sie wie in Fig. 8 gezeigt an der Hauptfläche 41 anliegen. Die Abzughaube 4 wird dann mit eingeklappten Seitenflächen 42 runtergeschwenkt bis sie wie in der Fig. 9 gezeigt am Grundkörper und teilweise auch an der Feuerschale 3 anliegt. Die Abzughaube 4 sowie auch die gesamte Grillvorrichtung befinden sich dann wie in Fig. 9 gezeigt in seiner beziehungsweise in ihrer Einstellposition.

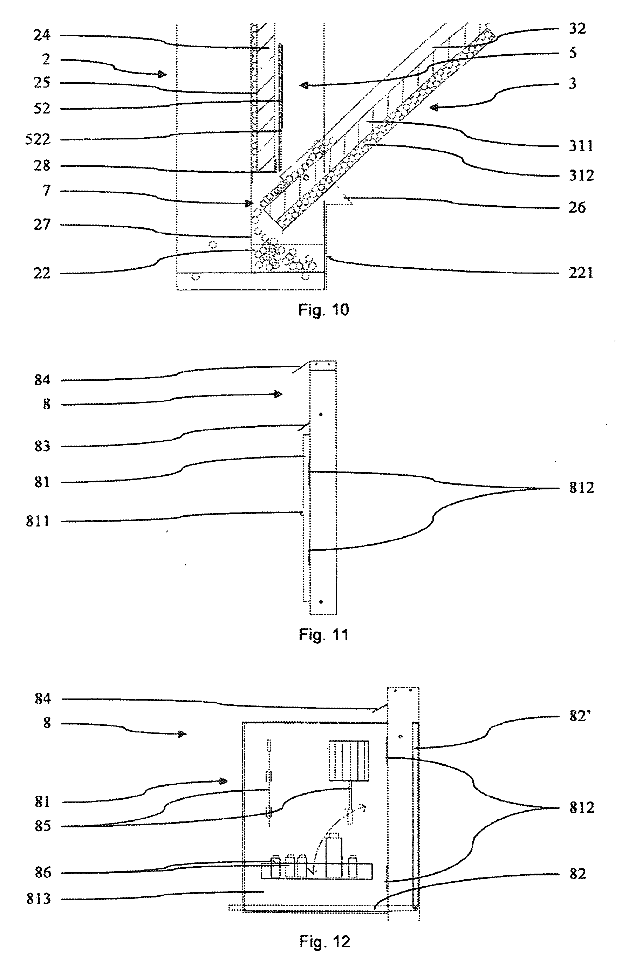

In Fig. 10 ist ein Teil des Grundkörpers 2 im Bereich, an dem die Feuerschale 3 am Grundkörper 2 montiert ist, detaillierter gezeigt. Darin ist einerseits die oben beschriebene Trennwand 27 des Grundkörpers 2 sowie auch eine Tragstruktur 28 des Grundkörpers 2 ersichtlich. Auf der Tragstruktur 28 ist die vertikale Schamottplatte 24 des Grundkörpers 2 und die Isolation 25 angeordnet. Wie oben beschrieben ist die Ascheschublade 22 des Grundkörpers 2 unterhalb der Feuerschale 3 so angeordnet, dass verbrannter Brennstoff 7 von der Feuerschale 3 in die Ascheschublade 22 rutscht und fällt, wenn die Feuerschale 3 hochgeschwenkt wird. Dabei rutscht der auf der Grundfläche 31 der Feuerschale 3 verbrannte Brennstoff 7 beim Hochschwenken der Feuerschale 3 durch den Rand 32 geführt in Richtung des Grundkörpers 2 bis er in die Ascheschublade 22 fällt.

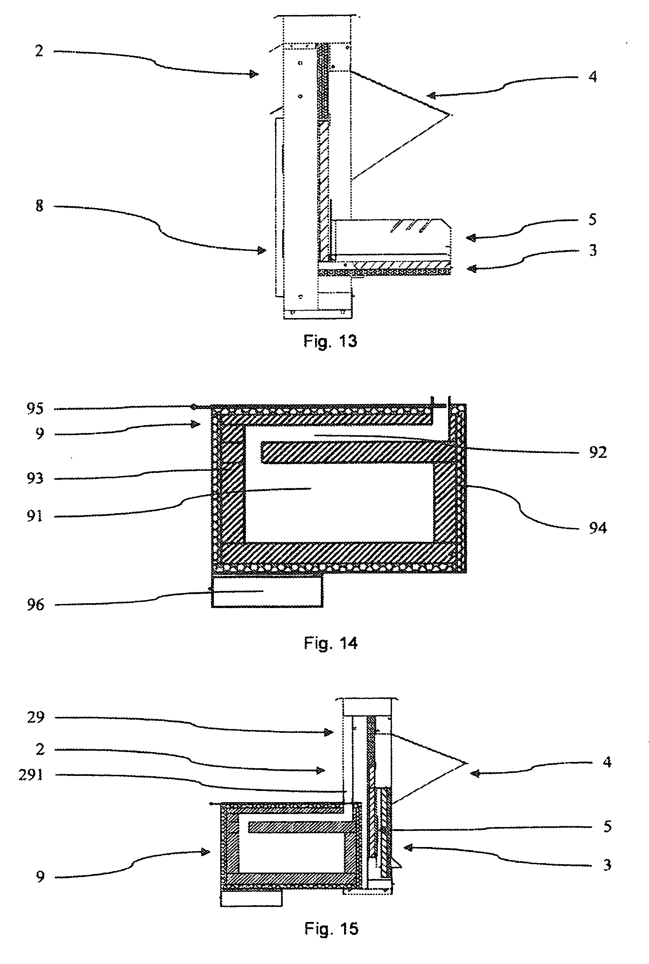

Fig. 11 zeigt ein Ausführungsbeispiel eines Schranks 8 für die Grillvorrichtung 1. Der Schrank 8 umfasst eine Schranktür 81 mit einem Griff 811 und zwei Scharnieren 812, die die Schranktür 81 mit einem Schrankkörper verbinden. Oberhalb der Schranktür 81 ist ein Ablaufdach 83 angeordnet und am oberen Ende des Schranks ein weiteres Ablaufdach 84. In Fig. 12 ist der Schrank 8 mit geöffneter Schranktür 81 gezeigt, wobei eine Innenseite 813 der Schranktür 81 sichtbar ist. An der Innenseite 813 sind Mittel zum Befestigen von Grillwerkzeug 85 und von Grillpflegemittel 86 oder von Ähnlichem angeordnet. Der Schrank 8 weist zudem eine Tischplatte 82, die mit dem Schrankkörper klappbar verbunden ist. Bei geöffneter Schranktür 81 ist die Tischplatte 82 horizontal anordbar. Wie durch den Pfeil in Fig. 12 angedeutet ist die Tischplatte 82 so schwenkbar, dass sie in eine horizontale Lage innerhalb des Schrankkörpers als Tischplatte 82' hochgeklappt sein kann. Wie in Fig. 13 gezeigt kann der Schrank 8 von einer der Feuerschale 3 abgewandten Rückseite des Grundkörpers 2 in den Grundkörper eingebaut werden. Die Grillvorrichtung 1 weist dann als Einheit den Schrank 8 auf.

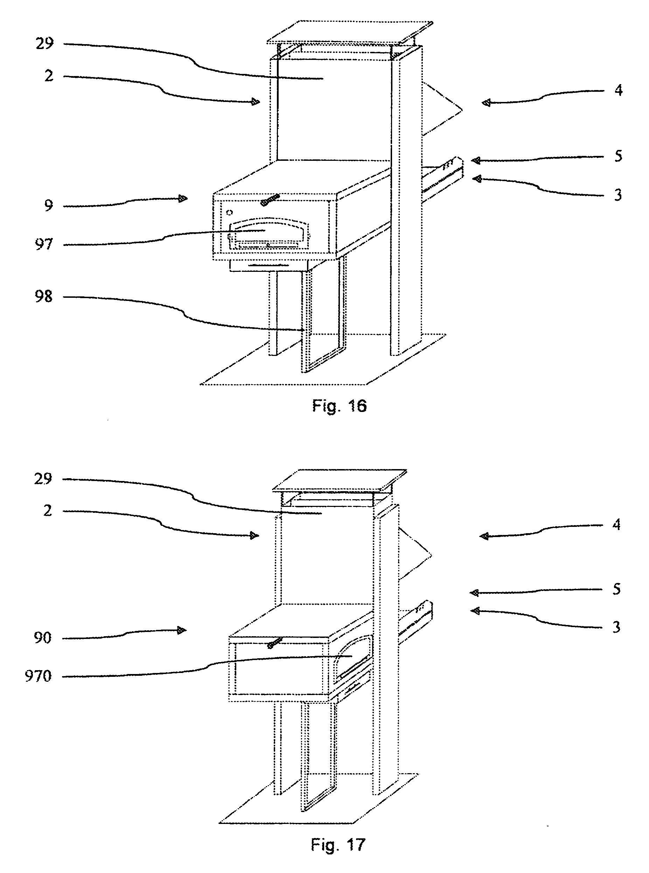

In Fig. 14 ist ein Ausführungsbeispiel eines Ofens 9 für die Grillvorrichtung 1 gezeigt. Der Ofen 9 umfasst eine Mehrzahl von Schamottplatten 93, die so angeordnet sind, dass ein Feuer- und Backraum 91 sowie ein Abzug 92 gebildet ist. Der Feuer- und Backraum 91 und der Abzug 92 sind nach außen hin von einer Isolation 94 umgeben. Unterhalb des Feuer- und Backraums 91 ist eine Ascheschublade 96 angeordnet, die ausgezogen werden kann, so dass Asche aus dem Feuer- und Backraum 91 in die Ascheschublade 96 gewischt werden kann. Der Ofen 9 umfasst weiter einen Zugschieber 95, mit dem der Abzug 92 nach außen hin geöffnet und geschlossen werden kann. Wie in Fig. 15 und in Fig. 16 gezeigt kann der Ofen von der Rückseite des Grundkörpers 2 in den Grundkörper eingebaut werden. Zusätzlich wird dabei ein Ofenabzugselement 29 in den Grundkörper 2 montiert, der einen mit dem Abzug 92 des Ofens 9 verbindbaren Abzugskanal 291 aufweist. Der Ofen 9 weist auch eine Ofentür 97 zum Öffnen und Schließen des Feuer- und Backraums 91 sowie eine Ofenstütze 98 auf, über die der Ofen 9 auf dem Boden gestützt ist. Die Grillvorrichtung 1 weist dann als Einheit den Ofen 9 auf.

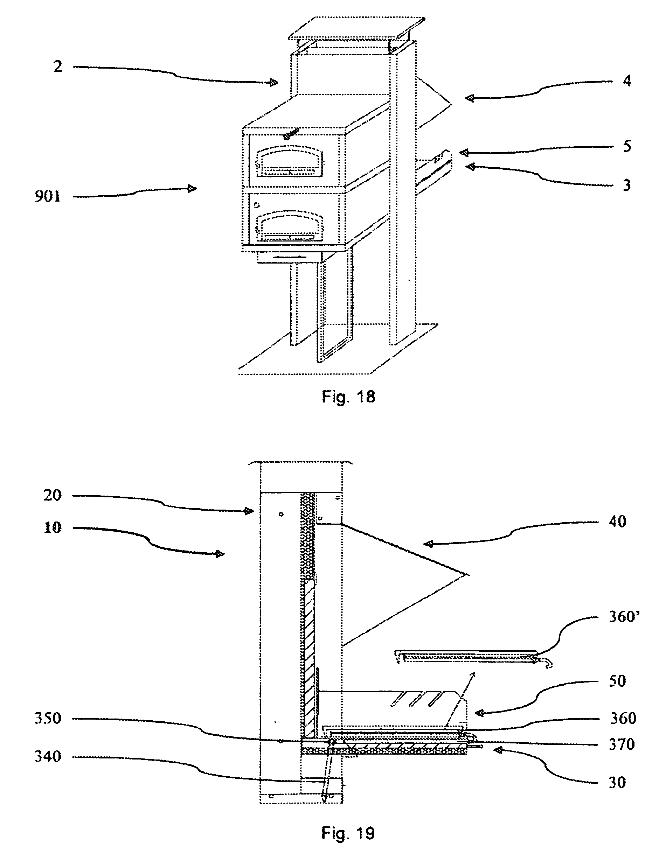

Fig. 17 zeigt die Grillvorrichtung 1, an der ein zweites Ausführungsbeispiel eines Ofens 90 montiert ist. Der Ofen 90 entspricht im Wesentlichen dem oben beschriebenen Ofen 9. Er weist jedoch eine seitliche Ofentür 970 auf, so dass er von der Seite her zugänglich ist. In Fig. 18 ist die Grillvorrichtung 1 mit einem dritten Ausführungsbeispiel eines Ofens 901 gezeigt. Der Ofen 901 ist analog zum oben beschriebenen Ofen 9 aufgebaut, wobei er zwei übereinander angeordnete unabhängige Feuer- und Backräume umfasst. Mit einem solchen Ofen 901 lassen sich verschiedene Backgüter unter verschiedenen Bedingungen gleichzeitig im Ofen 901 zubereiten.

Durch die modulare Ausgestaltung der Grillvorrichtung 1 kann je nach Bedürfnis ein passender Ofen 9, 90, 901 eingebaut sein oder auch ein Schrank 8. Die Öfen 9, 90, 901 beziehungsweise der Schrank 8 können auch im Betrieb ausgewechselt werden, so dass ein flexibles komfortables Betreiben der Grillvorrichtung 1 möglich ist.

In Fig. 19 ist ein zweites Ausführungsbeispiel einer Grillvorrichtung 10 gezeigt, wobei die Grillvorrichtung 10 analog zu der oben beschriebenen Grillvorrichtung 1 ausgestaltet einen Grundkörper 20, eine Abzughaube 40, eine Feuerschale 30 und eine Werkzeughalterung 50 aufweist. Zusätzlich umfasst die Grillvorrichtung 10 eine Gaszuleitung 340, die über mit einer Gasflasche verbindbar ist. Die Gaszuleitung 340 ist über ein Gasleitungsscharnier 350 mit einer Gasanschlussleitung 370 verbunden. Auf der Feuerschale 40 ist eine Gasgrilleinheit 360 die mit der Gasanschlussleitung 370 über einen Anschlussbogen lösbar dicht verbunden ist. Die Gasgrilleinheit 360 kann wie durch den Pfeil in Fig. 19 als Gasgrilleinheit 360' abgenommen werden. Mit dieser Grillvorrichtung 10 kann alternativ mit Gas oder mit einem festen Brennstoff geheizt und gegrillt werden.

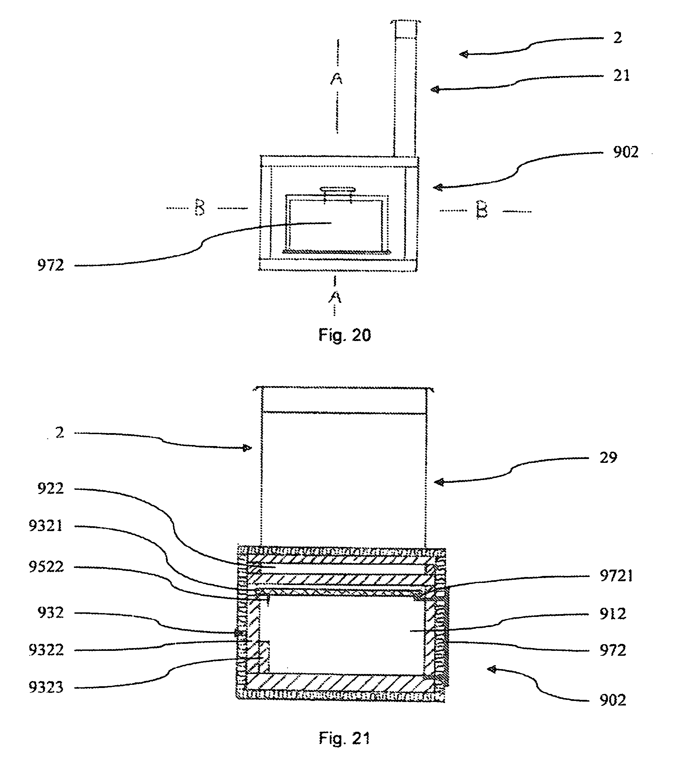

In Fig. 20 ist die Grillvorrichtung 1 gezeigt, an der ein viertes Ausführungsbeispiel eines Ofens 902 eingebaut ist, der ähnlich dem oben beschriebenen Ofen 90 mit einer seitlichen Ofentür 972 ausgestaltet ist. Wie in der Querschnittansicht von Fig. 21 ersichtlich umfasst der Ofen 902 einen Abzug 922 und eine äußere Isolation 942 zum Vermindern von Wärmeverlust aus dem Ofen 902 sowie zum Schutz von Personen und Gegenständen, die sich um den Ofen 902 herum befinden. Die Innenseite der Isolation 942 ist mit Schamottplatten 932 ausgestattet, von denen eine erste Auflageplatte 9322 eine obere Auflage für eine Unterteilplatte 9321 bildet und eine zweite Auflageplatte 9323 eine untere Auflage für die Unterteilplatte 9321. Die Ofentür 927 weist zwei sich in Richtung eines Innenraums 912 des Ofens 902 erstreckende Auflagehaken 9721 auf. In einer in der Fig. 21 gezeigten Ofenheizposition des Ofens 902 ist die Unterteilplatte 9321 einerseits auf der oberen Auflage der ersten Auflageplatte 9322 angeordnet und anderer auf den Auflagehaken 9721 der Ofentür 972. Die Unterteilplatte 9321 weist dabei zwei Aufnahmen auf, in welchen die Auflagehaken 9721 angeordnet sind, so dass die Unterteilplatte 9321 in einer oberen Position fixiert ist. Zudem erstreckt sich eine Einrastplatte 9522 von der Unterteilplatte 9321 rechtwinklig nach unten. Im Betrieb kann in der Ofenheizposition bequem Brennstoff verfeuert und der Innenraum 912 des Ofens 902 zweckmäßig geheizt werden.

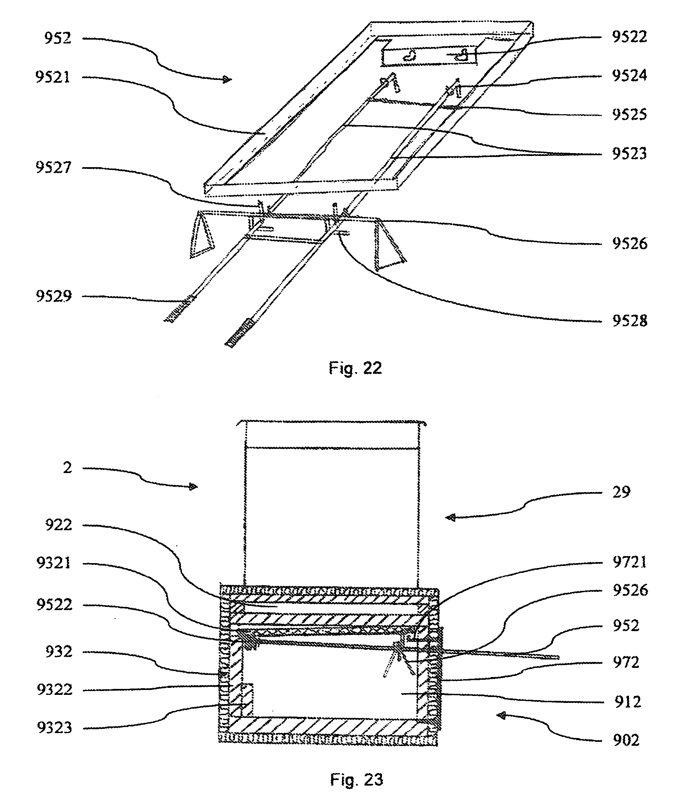

Fig. 22 zeigt eine Ofenraumvorrichtung 952 des Ofens 902. Die Ofenraumvorrichtung 952 umfasst einen im Profil L-förmigen Rahmen 952, der dazu ausgestaltet ist, die Unterteilplatte 9321 zu fassen und mit ihr verbunden zu sein. Die Einrastplatte 9321 ist fest mit dem Rahmen 952 verbunden, so dass sie rechtwinklig von einer Unterseite der Unterteilplatte 9321 absteht, wenn diese im Rahmen 952 angeordnet ist. Die Ofenraumvorrichtung 952 umfasst weiter eine Bedieneinrichtung und einen Stützrahmen 9526. Die Bedieneinrichtung weist zwei Stangen 9523 auf, die über zwei Querverstrebungen 9525 miteinander verbunden und zueinander in einem festen Abstand parallel gehalten sind. An ihren einem Längsende weisen die beiden Stangen 9523 jeweils einen Griff 9529 auf und an ihren anderen Längsenden jeweils einen Einrasthaken 9524, der im Wesentlichen rechtwinklig zu den Stangen 9523 angeordnet ist. Die Einrastplatte 9522 weist zwei L-förmige Ausstanzungen auf, die dazu ausgestaltet sind, die beiden Einrasthaken 9524 der Bedieneinrichtung aufzunehmen.

Der Stützrahmen 9525 weist zwei dreieckige Füße auf, die über eine Querstange miteinander fest verbunden und somit im Wesentlichen ortsfest zueinander gehalten sind. An der Querstange sind zwei L-förmige Halteelemente 9528 fest angeordnet, die dazu ausgestaltet sind, dass die Stangen 9523 der Bedieneinrichtung seitlich eingeführt werden können und damit der Stützrahmen 9525 lose an der Bedieneinrichtung gehalten werden kann. Zudem sind an den Stangen 9523 der Bedieneinrichtung zwei Auflagepfosten 9527 fest angeordnet, die sich parallel zueinander nach oben erstrecken.

In Fig. 23 ist der Ofen 902 in einer ersten Übergangsposition von der Ofenheizposition in eine Ofenbetriebsposition gezeigt. Die Unterteilplatte 9321 der Schamottplatten 932 ist fest mit dem Rahmen 9521 der Ofenraumvorrichtung 952 verbunden. Durch die Ofentür 972 hindurch ist die Bedieneinheit der Ofenraumvorrichtung 952 so eingeführt, dass die Einrasthaken 9524 in den Ausstanzungen der Einrastplatte 9522 eingerastet sind und dass Auflagepfosten 9527 an der Unterteilplatte 9321 anliegen. Über die an der Querstange des Stützrahmens 9526 anliegenden Stangen 9523 der Bedieneinrichtung und den mit den Stangen 9523 fest verbundenen Auflagepfosten 9527 ist die Unterteilplatte 9321 an ihrem der Ofentür 972 zugewandten Ende so angehoben, dass sie aus den Auflagehaken 9721 gehoben und somit nicht mehr an diesen fixiert ist.

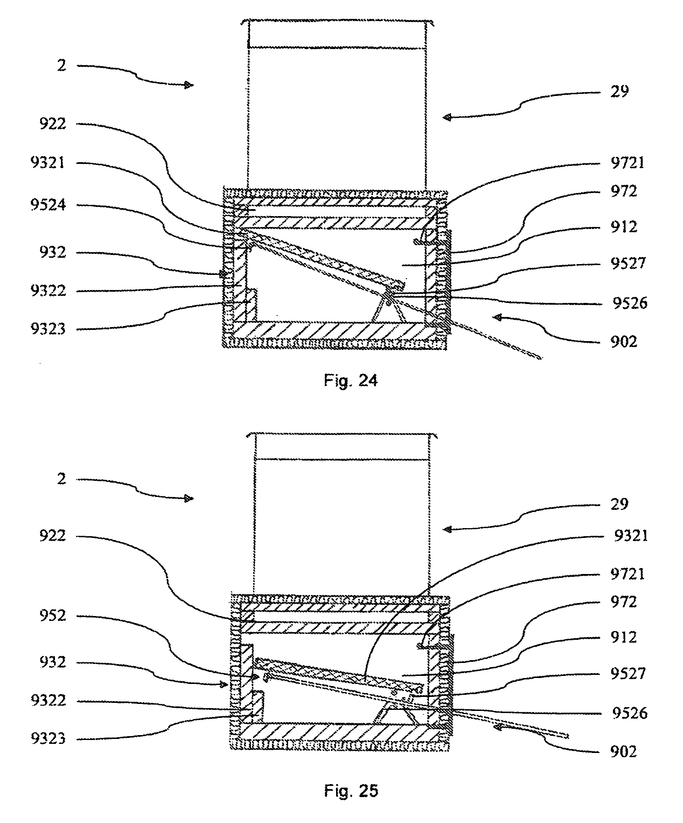

Fig. 24 zeigt den Ofen 902 in einer zweiten Übergangsposition von der Ofenheizposition in die Ofenbetriebsposition, wobei die Unterteilplatte 9321 mittels der Bedieneinrichtung leicht in Richtung entgegen der Ofentür 972 geschoben ist, so dass die Auflagepfosten 9527 der Bedieneinrichtung in den Aufnahmen der Unterteilplatte 9321 angeordnet sind und so dass die Unterteilplatte 9321 vertikal an den Auflagehaken 9721 vorbei bewegbar ist. Die der Ofentür 972 zugewandte Seite der Unterteilplatte 9321 ist in Fig. 24 soweit abgesenkt, dass die Füße des Stützrahmens 9525 am Boden des Ofens 902 aufliegen und dass die Unterteilplatte 9321 auf der Querstange des Stützrahmens 9525 aufliegt.

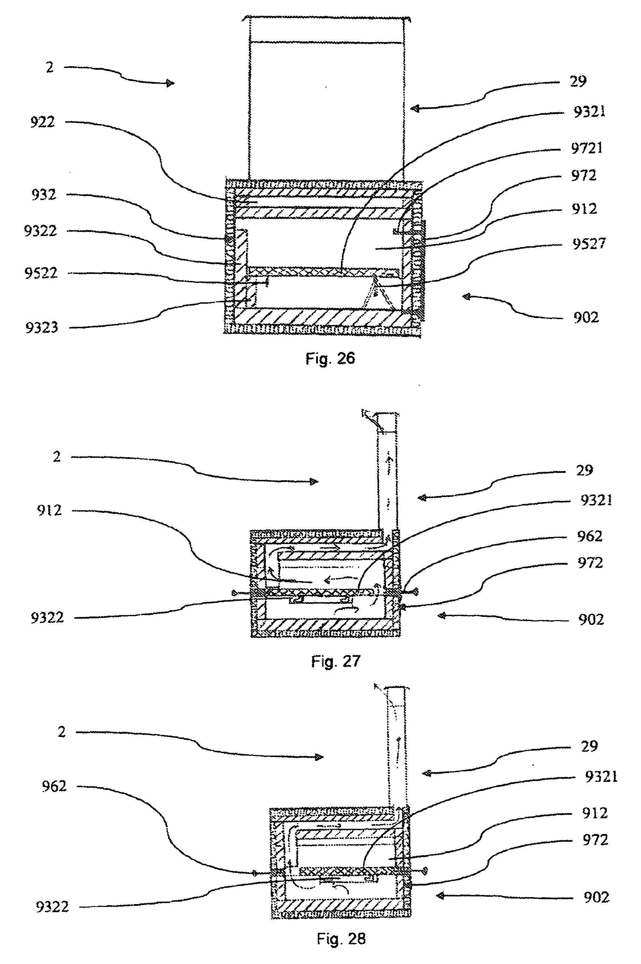

In Fig. 25 ist der Ofen 902 in einer dritten Übergangsposition von der Ofenheizposition in die Ofenbetriebsposition gezeigt. Dabei ist die Unterteilplatte 9321 mittels der Bedieneinrichtung leicht in Richtung der Ofentür 972 zurückgeschoben, so dass die Unterteifplatte 9321 vertikal an der ersten Auflageplatte 9322 vorbei bewegbar ist. Wie in Fig. 25 ersichtlich werden bei vertikalem Abwärtsbewegen des der Ofentür 972 abgewandten Endes der Unterteilplatte 9321 die Auflagepfosten 9527 aus den Aufnahmen der Unterteilplatte 9321 gehoben, so dass diese lediglich noch auf der Querstange des Stützrahmens 9526 aufliegt, jedoch nicht mehr über die Auflagepfosten 9527 mit der Bedieneinrichtung verbunden ist. Fig. 26 zeigt den Ofen 902 in der Ofenbetriebsposition, wobei die Bedieneinrichtung der Ofenraumvorrichtung 952 aus dem Ofen 902 entfernt ist. In dieser Ofenbetriebsposition ist die Unterteilplatte 9321 der Schamottplatten 932 im Wesentlichen horizontal angeordnet, wobei sie an ihrer der Ofentür 972 abgewandten Seite auf der durch die zweite Auflageplatte 9323 gebildeten unteren Auflage aufliegt und an ihrer der Ofentür 972 zugewandten Seite auf dem Stützrahmen 9525. Im Betrieb unterteilt die Unterteilplatte 9321 in der Ofenbetriebsposition den Innenraum 912 in einen oberen Teil, in dem das Back- oder Bratgut anordbar ist, und einen unteren Teil, in dem der Brennstoff anordbar ist. Durch diese Zweiteilung des Innenraums 912 kann unter anderem ermöglicht werden, dass das Back- bzw. Bratgut gleichmäßig erhitzt wird und dass eine Verunreinigung durch den Brennstoff vermindert wird.

In Fig. 27 und in Fig. 28 ist der Ofen 902 in einer im Vergleich zu den Fig. 21 und 23 bis 26 um 90° gedrehten Stellung gezeigt. Dabei zeigt Fig. 27 den Ofen 902 in einer ersten Ofenbetriebsposition, in welcher die Unterteilplatte 9321 der Schamottplatten 932 mittels einer Verschiebeeinrichtung 962 nach links verschoben ist. Wie durch die Pfeile in Fig. 27 angedeutet wird dadurch die Abluft vom unteren mit Brennstoff beladenden Teil des Innenraums 912 durch den oberen für das Back- und Bratgut vorgesehenen Teil des Innenraums 912 in den Abzug 922 geführt. Auf diese Weise kann das Back- bzw. Bratgut verhältnismäßig stark erhitzt beziehungsweise direkt geheizt werden. Fig. 28 zeigt den Ofen 902 in einer zweiten Ofenbetriebsposition, in welcher die Unterteilplatte 9321 der Schamottplatten 932 mittels der Verschiebeeinrichtung 962 nach rechts verschoben ist. Wie durch die Pfeile in Fig. 28 angedeutet wird dadurch die Abluft vom unteren mit Brennstoff beladenen Teil des Innenraums 912 am oberen für das Back- und Bratgut vorgesehenen Teil des Innenraums 912 vorbei in den Abzug 922 geführt. Auf diese Weise kann das Back- bzw. Bratgut weniger stark erhitzt beziehungsweise indirekt geheizt werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen.

## Patentansprüche

1. Grillvorrichtung (1; 10), die eine Feuerschale (3;30) zum Verfeuern eines in der Feuerschale (3;30) angeordneten Brennstoffs und einen Grundkörper (2; 20) mit einem Abluftabzug (21) zum gezielten Abführen von durch den verfeuerten Brennstoff erzeugter Abluft umfasst, wobei die Feuerschale schwenkbar mit dem Grundkörper (2; 20) verbunden ist, so dass die Feuerschale (3;30) in einer Feuerposition, in welcher die Feuerschale (3;30) vom Grundkörper (2; 20) aufgeklappt ist und in welcher der Brennstoff in der Feuerschale (3;30) verfeuerbar ist, und in einer Einstellposition, in der die Feuerschale (3;30) am Grundkörper (2; 20) anliegt, anordbar ist, **dadurch gekennzeichnet, dass** die Grillvorrichtung (1; 10) eine Abzughaube (4; 40) aufweist, die schwenkbar am Grundkörper (2; 20) angeordnet ist, so dass die Abzughaube (4; 40) in einer Abzugposition, in der die Abzughaube (4; 40) vom Grundkörper (2; 20) aufgeklappt ist und in der die durch den verfeuerten Brennstoff erzeugte Abluft über die Abzughaube (4; 40) dem Abluftabzug (21) zuführbar ist, und in einer Einstellposition, in der die Abzughaube (4; 40) am Grundkörper (2; 20) anliegt, anordbar ist.

2. Grillvorrichtung (1; 10) nach Anspruch 1, bei der die Feuerschale (3;30) eine Grundfläche (31) und einen Rand (32) aufweist, wobei sich der Rand (32) entlang der Seiten der Grundfläche (31) erstreckt, die nicht dem Grundkörper (2; 20) zugewandt sind, und wobei der Rand (32) zum Sichern des Brennstoffs in der Feuerschale (3;30) von der Grundfläche (31) absteht.

3. Grillvorrichtung (1; 10) nach Anspruch 1 oder 2, bei der der Grundkörper (2; 20) einen Aschefänger (22) umfasst, wobei die Feuerschale (3;30) so mit dem Grundkörper (2; 20) verbunden ist, dass in der Feuerschale (3;30) angeordnete Asche in den Aschefänger (22) bewegt ist, wenn die Feuerschale (3;30) in der Einstellposition angeordnet ist.

4. Grillvorrichtung (1; 10) nach einem der vorangehenden Ansprüche, bei der die Abzughaube (4; 40) eine Hauptfläche (41) und zwei einklappbar mit der Hauptfläche (41) verbundene Seitenflächen (42, 43) aufweist.

5. Grillvorrichtung (1; 10) nach einem der vorangehenden Ansprüche, die eine Werkzeughalterung (5; 50) umfasst, die klappbar mit dem Grundkörper (2; 20) verbunden ist, so dass in der Feuerposition der Feuerschale (3;30) ein Grillwerkzeug in der Werkzeughalterung (5; 50) anordbar ist und dass die Werkzeughalterung (5; 50) in der Einstellposition am Grundkörper (2; 20) anliegend angeordnet ist.

6. Grillvorrichtung (1; 10) nach einem der vorangehenden Ansprüche, bei welcher der Grundkörper (2; 20) einen Schrank (8) umfasst, der eine an einer der Feuerschale (3;30) abgewandten Rückseite des Grundkörpers (2; 20) ausgebildete Schranktür (81) aufweist.

7. Grillvorrichtung (1; 10) nach Anspruch 6, bei welcher der Schrank (8) eine Tischplatte (82, 82') umfasst, die bei geöffneter Schranktür (81) aus dem Grundkörper (2; 20) ausklappbar ist.

8. Grillvorrichtung (1; 10) nach einem der Ansprüche 1 bis 5, die einen Ofen (9; 90; 901; 902) umfasst, der an einer der Feuerschale (3;30) abgewandten Rückseite des Grundkörpers (2; 20) am Grundkörper (2; 20) befestigbar ist, so dass ein Abluftabzug (21) des Ofens (9; 90; 901; 902) in den Abluftabzug (21) des Grundkörpers (2; 20) mündet.

9. Grillvorrichtung (1; 10) nach Anspruch 8, bei welcher der Ofen (9; 90; 901; 902) einen Feuerraum (91) zum Heizen des Ofens (9; 90; 901; 902) mittels eines festen Brennstoffs und ein Gasfeuersystem zum Heizen des Ofens (9; 90; 901; 902) mittels eines gasförmigen Brennstoffs umfasst.

## Claims

1. A barbecuing device (1; 10) comprising a fire pit (3; 30) for burning a combustible material within the fire pit (3; 30) and a base body (2; 20) comprising an exhaust flue (21) for systematically discharging exhaust gases generated by the burnt combustible material, wherein the fire pit (3; 30) is swivel-mounted to the base body (2; 20) so that the fire pit (3; 30) is arrangeable in a burning position, in which the fire pit (3; 30) is swung open from the base body (2; 20) and in which the combustible material may be burned in the fire pit (3; 30), and in a folded position, in which the fire pit (3; 30) rests against the base body (2; 20), **characterised in that** the barbecuing device (1; 10) comprises an exhaust hood (4; 40) that is swivel-mounted to the base body (2; 20) so that the exhaust hood (4; 40) is arrangeable in a discharging position, in which the exhaust hood (4; 40) is swung open from the base body (2; 20) and the exhaust gases generated by the burnt combustible material may be supplied to the exhaust flue (21) via the exhaust hood (4; 40), and in a folded position, in which the exhaust hood (4; 40) rests against the base body (2; 20).

2. The barbecuing device (1; 10) according to claim 1, in which the fire pit (3; 30) comprises a base surface (31) and a rim (32), wherein the rim (32) extends along the sides of the base surface (31) not facing the base body (2; 20) and the rim (32) extends from the base surface (31) for retaining the combustible material within the fire pit (3; 30).

3. The barbecuing device (1; 10) according to claim 1 or 2, wherein the base body (2; 20) comprises an ash container (22), wherein the fire pit (3; 30) is connected to the base body (2; 20) such that the ash within the fire pit (3; 30) is moved into the ash container (22) if the fire pit (3; 30) is arranged in the folded position.

4. The barbecuing device (1; 10) according to any of the preceding claims, wherein the exhaust hood (4; 40) comprises a main surface (41) and two lateral surfaces (42, 43) that are retractably connected with the main surface (41).

5. The barbecuing device (1; 10) according to any of the preceding claims comprising a tool holder (5; 50) that is retractable connected to the base body (2; 20) so that in the burning position of the fire pit (3; 30) a barbecue tool is arrangeable in the tool holder (5; 50) and in the folded position the tool holder (5; 50) is arranged so as to rest against the base body (2; 20).

6. The barbecuing device (1; 10) according to any of the preceding claims, wherein the base body (2; 20) comprises a cabinet (8) comprising a cabinet door (81) formed at a reverse side of the base body (2; 20) facing away from the fire pit (3; 30).

7. The barbecuing device (1; 10) according to claim 6, wherein the cabinet (8) comprises a table plate (82, 82') that is foldable out of the base body (2; 20) if the cabinet door (81) is open.

8. The barbecuing device (1; 10) according to any of claims 1 to 5 comprising an oven (9; 90; 901; 902) that is attachable to the base body (2; 20) at a reverse side of the base body (2; 20) facing away from the fire pit (3; 30) such that an exhaust flue (21) of the oven (9; 90; 901; 902) ends in the exhaust flue (21) of the base body (2; 20).

9. The barbecuing device (1; 10) according to claim 8, wherein the oven (9; 90; 901; 902) comprises a combustion chamber (91) for heating the oven (9; 90; 901; 902) using a solid fuel and a gas firing system for heating the oven (9; 90; 901; 902) using a fuel gas.

## Revendications

1. Barbecue (1; 10), comprenant un foyer (3; 30) pour la combustion d'un combustible disposé dans le foyer (3; 30) et un bâti de base (2; 20) avec une extraction d'air (21) pour l'évacuation définie de l'air d'extraction produit par le combustible en combustion, le foyer (3; 30) étant monté de manière à pouvoir pivoter sur le bâti de base (2; 20), si bien que ledit foyer (3; 30) peut être agencé dans une position de combustion, où le foyer (3; 30) est ouvert par rapport au bâti de base (2; 20) et où le combustible peut être mis à feu dans le foyer (3; 30), et dans une position de rangement, où le foyer (3; 30) est rabattu contre le bâti de base (2; 20), **caractérisé en ce que** ledit barbecue (1; 10) comporte un auvent d'extraction (4; 40) monté de manière à pouvoir pivoter sur le bâti de base (2; 20), si bien que ledit auvent d'extraction (4; 40) peut être placé dans une position d'extraction, où l'auvent d'extraction (4; 40) est ouvert par rapport au bâti de base (2; 20) et où l'air d'extraction produit par le combustible en combustion peut être conduit vers l'extraction d'air (21) par l'auvent d'extraction (4; 40), et dans une position de rangement, où l'auvent d'extraction (4; 40) est rabattu contre le bâti de base (2; 20).

2. Barbecue (1; 10) selon la revendication 1, où le foyer (3; 30) comporte une surface de base (31) et un bord (32), le bord (32) s'étendant le long des côtés de la surface de base (31) qui ne sont pas opposées au bâti de base (2; 20), et le bord (32) faisant saillie de la surface de base (31) pour retenir le combustible dans le foyer (3; 30).

3. Barbecue (1; 10) selon la revendication 1 ou la revendication 2, où le bâti de base (2; 20) comprend un bac à cendre (22), le foyer (3; 30) étant monté sur le bâti de base (2; 20) de telle manière que la cendre présente dans le foyer (3; 30) est évacuée vers le bac à cendre (22) quand le foyer (3; 30) est mis en position de rangement.

4. Barbecue (1; 10) selon l'une des revendications précédentes, où l'auvent d'extraction (4; 40) comporte une surface principale (41) et deux surfaces latérales (42, 43) montées de manière à pouvoir être rabattues contre la surface principale (41).

5. Barbecue (1; 10) selon l'une des revendications précédentes, comprenant un support d'outil (5; 50) monté de manière à pouvoir être rabattu contre le bâti de base (2; 20), de manière à pouvoir disposer un outil pour barbecue dans le support d'outil (5; 50) en position de combustion du foyer (3; 30), et à pouvoir appliquer le support d'outil (5; 50) contre le bâti de base (2; 20) en position de rangement.

6. Barbecue (1; 10) selon l'une des revendications précédentes, où le bâti de base (2; 20) comprend une armoire (8) qui comporte une porte d'armoire (81) réalisée sur une face arrière, distante du foyer (3; 30), du bâti de base (2; 20).

7. Barbecue (1; 10) selon la revendication 6, où l'armoire (8) comprend un plateau de table (82, 82') qui peut être déployé du bâti de base (2; 20) lorsque la porte d'armoire (81) est ouverte.

8. Barbecue (1 ; 10) selon l'une des revendications 1 à 5, lequel comprend un four (9; 90; 91; 902) pouvant être fixé contre le bâti de base (2; 20) sur une face arrière, distante du foyer (3; 30), du bâti de base (2; 20), de telle manière qu'une extraction d'air (21) du four (9; 90; 901; 902) débouche dans l'extraction d'air (21) du bâti de base (2; 20).

9. Barbecue (1; 10) selon la revendication 8, où le four (9; 90; 901; 902) comprend une chambre de combustion (91) pour le chauffage du four (9; 90; 901; 902) au moyen d'un combustible solide, et un système de combustion à gaz pour le chauffage du four (9; 90; 901; 902) au moyen d'un combustible gazeux.
